# EUROPÄISCHE PATENTSCHRIFT

(11) **EP 2 117 806 B1**
(45) Veröffentlichungstag und Bekanntmachung des Hinweises auf die Patenterteilung: **06.01.2016**
(21) Anmeldenummer: 08706882.1
(22) Anmeldetag: 08.02.2008
(51) Int. Cl.: B29C 49/12, B29C 49/36, B29C 49/78

(54) **VERFAHREN UND VORRICHTUNG ZUR BLASFORMUNG VON BEHÄLTERN UNTER VERWENDUNG EINES SERVOMOTORS FÜR DIE RECKSTANGE**
METHOD AND DEVICE FOR BLOW MOULDING CONTAINERS WITH THE USE OF SERVOMOTOR DRIVEN STRETCH ROD
PROCÉDÉ ET DISPOSITIF DE SOUFFLAGE DE CONTENEURS AVEC L'UTILISATION D'UN SERVOMOTEUR POUR ENTRAÎNER LA TIGE D'ÉTIRAGE

(30) Priorität: 15.02.2007 DE 102007006023
(43) Veröffentlichungstag der Anmeldung: 18.11.2009
(73) Patentinhaber: KHS Corpoplast GmbH, 22145 Hamburg (DE)
(72) Erfinder: HERKLOTZ, Thorsten, 22926 Ahrensburg (DE); LESINSKI, Werner, 22926 Ahrensburg (DE); BAUMGARTE, Rolf, 22926 Ahrensburg (DE); LEWIN, Frank, 22889 Tangstedt (DE); LITZENBERG, Michael, 21502 Geesthacht (DE); LINKE, Michael, 22047 Hamburg (DE)
(74) Vertreter: Hausfeld, Norbert
(86) Internationale Anmeldenummer: PCT/DE2008/000263
(87) Internationale Veröffentlichungsnummer: WO 2008/098565

(56) Entgegenhaltungen:
- EP-A- 0 577 384
- EP-A- 1 588 825
- EP-A1- 0 577 384
- EP-A1- 1 588 825
- EP-A2- 0 499 136
- WO-A-2006/108380
- DE-A1- 2 352 926
- DE-A1- 10 325 229
- DE-A1-102005 040 905
- DE-T2- 69 901 814
- JP-A- 11 048 316
- JP-A- 2006 240 238
- JP-B2- 3 391 904

## Beschreibung

Die Erfindung betrifft ein Verfahren zur Blasformung von Behältern gemäß dem Oberbegriff von Anspruch 1.

Die Erfindung betrifft darüber hinaus eine Vorrichtung zur Blasformung von Behältern gemäß dem Oberbegriff von Anspruch 9.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführ-bar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Durchführung der Bewegungskoordinierung der Reckstange kann nach unterschiedlichen Prinzipien erfolgen. Bekannt ist es beispielsweise, die Reckstange unter Verwendung von Kurvenrollen zu positionieren, die entlang von Kurvenbahnen geführt sind. Eine besonders hohe Genauigkeit und Reproduzierbarkeit des Reckvorganges lässt sich bei derartigen Kurvensteuerungen realisieren, wenn die Kurvenrollen zweiseitig geführt sind und hierdurch einer exakt definierten Bahn folgen. Derartige Kurvensteuerungen weisen aber den Nachteil auf, dass schwere und räumlich groß dimensionierte Kurvenbahnen verwendet werden müssen, die in der Regel aus Stahl gefertigt sind. Eine Umrüstung des Recksystems zur Durchführung abgeänderter Reckbewegungen verursacht einen hohen Aufwand.

Es sind ebenfalls Kurvensteuerungen bekannt, bei denen die Kurvenrollen lediglich einseitig geführt werden und unter Verwendung von Pneumatikzylindern gegen die einseitige Führungsbahn gedrückt werden. Es liegt hier zwar eine vereinfachte und somit preiswertere und leichtere Konstruktion vor, in Abhängigkeit von den auftretenden Reckkräften kann die Kurvenrolle aber entgegen der belastenden pneumatischen Spannkraft von der Kurvenbahn abheben und der Reckvorgang verlässt hierdurch die vorgegebene Prozeßcharakteristik. Hieraus resultiert eine verschlechterte Qualität der geblasenen Behälter.

Sehr genaue Recksysteme können unter Verwendung von elektrischen Linearmotoren bereitgestellt werden. Linearmotoren der erforderlichen Leistungsstärke sind derzeit jedoch noch sehr teuer und beanspruchen darüber hinaus einen großen Bauraum. Bekannt geworden sind ebenfalls bereits reine pneumatische Recksysteme sowie Hybridsysteme, bei denen sowohl pneumatische Antriebe als auch Linearmotoren zum Einsatz kommen.

Aus der EP 0 577 384 A, der EP 1 588 825 A sowie der JP 11048316 A sind jeweils stationäre Taktmaschinen bekannt, deren Recksysteme von Gewindestangen und Servomotoren gesteuert werden. Die Gewindestangen positionieren jeweils eine Quertraverse, an der vier Reckstangen für vier Blasformen angeordnet sind. Der Reckvorgang für alle vier Blasformen wird somit zeitgleich und identisch durchgeführt.

In der WO 2006/108380 A wird eine Blasmaschinen mit einem rotierenden Blasrad beschrieben. Die Blasmaschinen besitzen jeweils ein Recksystem, daß sowohl einen Fluidantrieb als auch einen elektrischen Linearmotor aufweist.

JP-A-2006240238 offenbart ein Verfahren gemäß dem Oberbegriff des Anspruchs 1 und eine Vorrichtung gemäß dem Oberbegriff des Anspruchs 9.

Sämtliche bislang bekannt gewordenen Systeme zur Koordinierung der Durchführung eines Reckvorganges weisen somit eine Reihe von Vor- und Nachteilen auf, eine optimale Erfüllung der gestellten Anforderungen bei einer Minimierung der verbleibenden Nachteile konnte bislang aber noch nicht erreicht werden.

Aufgabe der vorliegenden Erfindung ist es daher, ein Verfahren der einleitend genannten Art derart anzugeben, dass eine einfach adaptierbare, preiswerte und zugleich leichte Steuereinrichtung für das Recksystem bereitgestellt wird.

Diese Aufgabe wird erfindungsgemäß durch ein Verfahren mit den kennzeichnenden Merkmalen des Anspruchs 1 gelöst.

Weitere Aufgabe der vorliegenden Erfindung ist es, eine Vorrichtung der einleitend genannten Art derart zu gestalten, dass eine kompakte und zugleich einfach adaptierbare Reckstangensteuerung bereitgestellt wird.

Diese Aufgabe wird erfindungsgemäß durch eine Vorrichtung mit den kennzeichnenden Merkmalen des Anspruchs 9 gelöst.

Die Kombination des elektro-mechanischen Reckstangenantriebes, der mechanischen Kopplungseinrichtung sowie der Reckstange stellt ein starres Recksystem bereit, das eine bei pneumatischen Recksystemen auftretende Nachgiebigkeit vermeidet. Es kann hierdurch eine äußerst präzise Reckstangenpositionierung gewährleistet werden. Darüber hinaus wird durch das relativ geringe Baugewicht der einzelnen Komponenten eine geringe mechanische Trägheit und somit eine hohe Ansteuerungsdynamik bereitgestellt.

Eine kompakte Konstruktion wird insbesondere dadurch unterstützt, dass die Transformation des Drehbewegung in die Hubbewegung unter Verwendung einer Gewindestange durchgeführt wird, auf der ein Kopplungselement mit einem Innengewinde geführt wird.

Eine nochmals gesteigerte Kompaktheit kann dadurch erreicht werden, dass die Gewindestange in Richtung einer Längsachse der Motorwelle positioniert wird.

Eine prozesstechnische Verbesserung kann dadurch erreicht werden, dass unter Verwendung des Servomotors und der Gewindestange ein kraftgesteuertes Recken durchgeführt wird.

Eine andere Variation bei der Behälterherstellung besteht darin, dass unter Verwendung des Servomotors und der Gewindestange ein kraftgesteuertes Blasen durchgeführt wird.

Zur Verminderung des Energiebedarfs wird vorgeschlagen, dass der Servomotor bei einer Rückhubbewegung der Reckstange generatorisch betrieben wird. Eine elektrische Optimierung wird dadurch unterstützt, dass der Servomotor von einer in seiner unmittelbaren Umgebung angeordneten Steuerung beaufschlagt wird.

Zur Vermeidung eines Getriebes und der hieraus resultierenden Trägheiten ist vorgesehen, dass die Gewindestange mit einer identischen Drehzahl wie die Motorwelle betrieben wird.

Zur Vermeidung einer Verschmutzung der Reckstange wird vorgeschlagen, dass die Gewindestange in Richtung auf die Reckstange von einer Verkleidung verdeckt wird.

Hohe Datentransferraten können dadurch erreicht werden, dass eine Steuerung des Servomotors von einem Bussystem mit einer externen Steuerung verbunden wird.

Eine typische Ausführungsform besteht darin, dass der Servomotor von einem Blasrad umlaufend transportiert wird.

Ein modulares Steuerungskonzept wird dadurch unterstützt, dass der Servomotor mit einer auf dem Blasrad angeordneten Spannungsversorgung sowie einer auf dem Blasrad angeordneten Steuereinheit verbunden wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Seitenansicht einer Blasstation, bei der eine Reckstange von einem Reckstangenträger positioniert wird und
- Fig. 6: einen Längsschnitt durch die Anordnung gemäß Fig. 5.

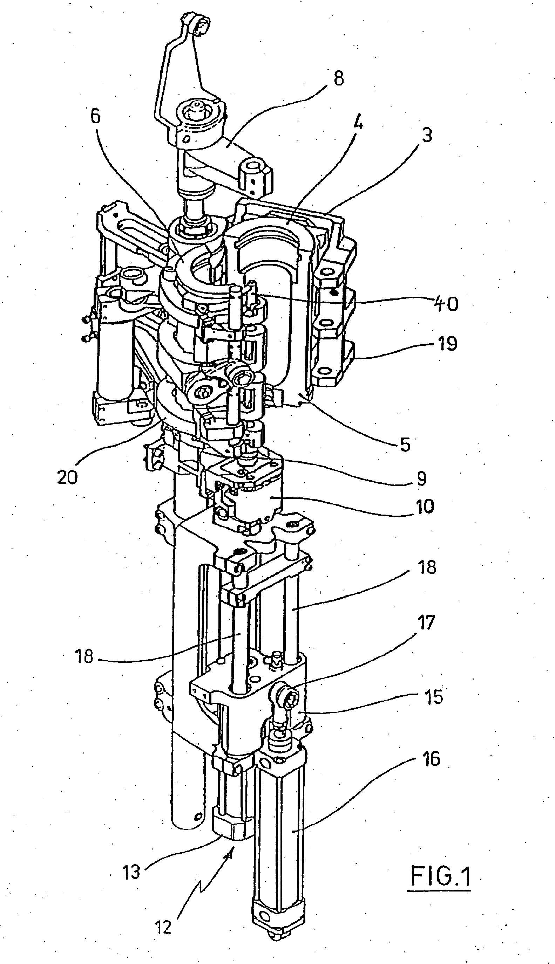

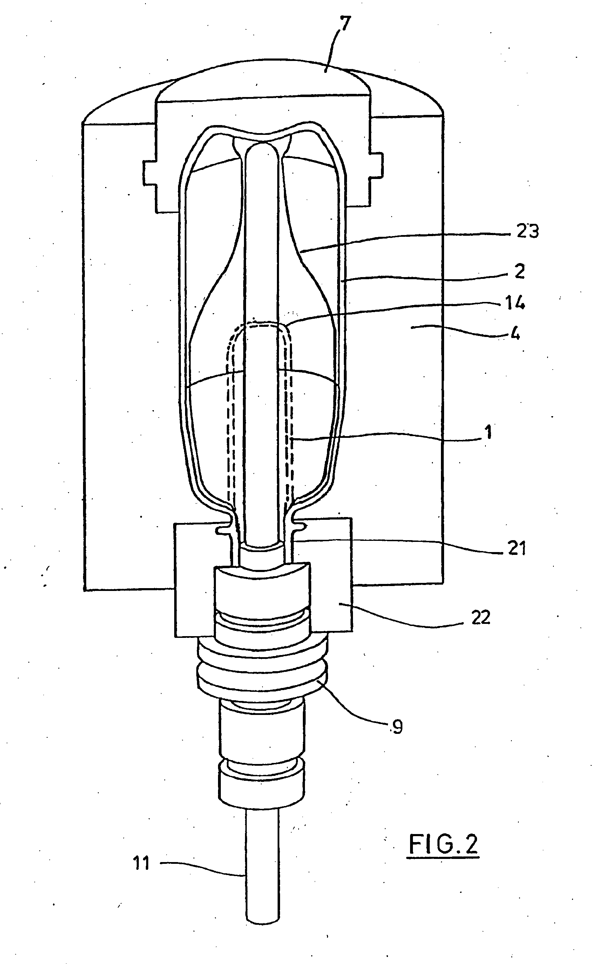

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, dass eine Tandemanordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen .die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

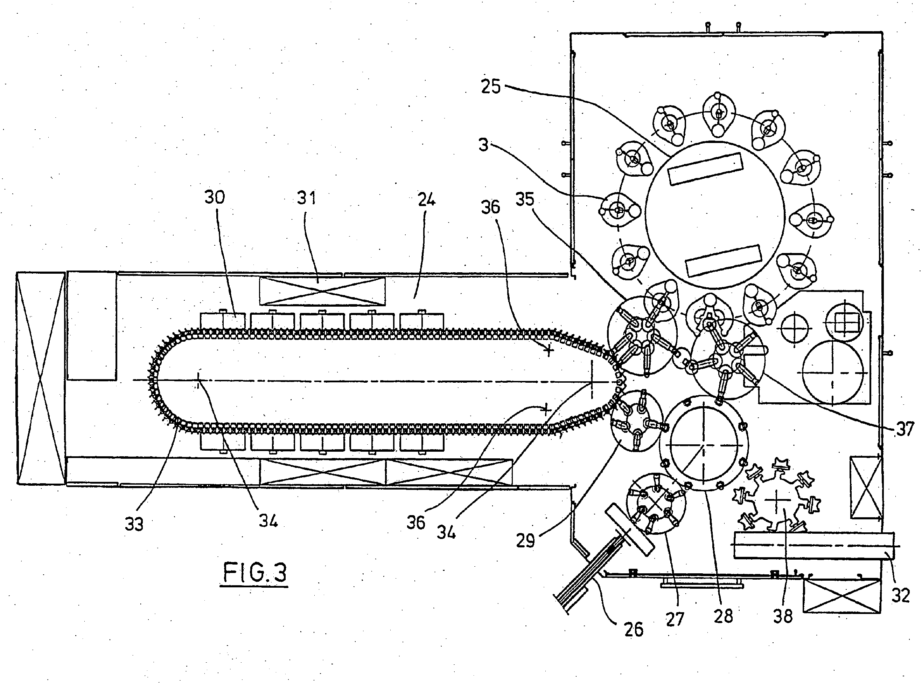

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt. Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

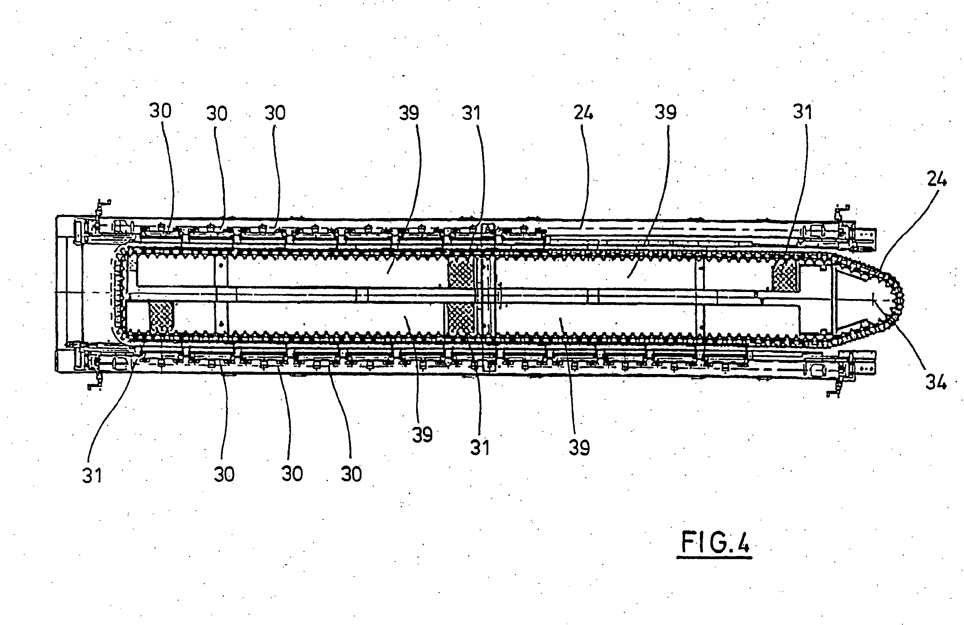

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

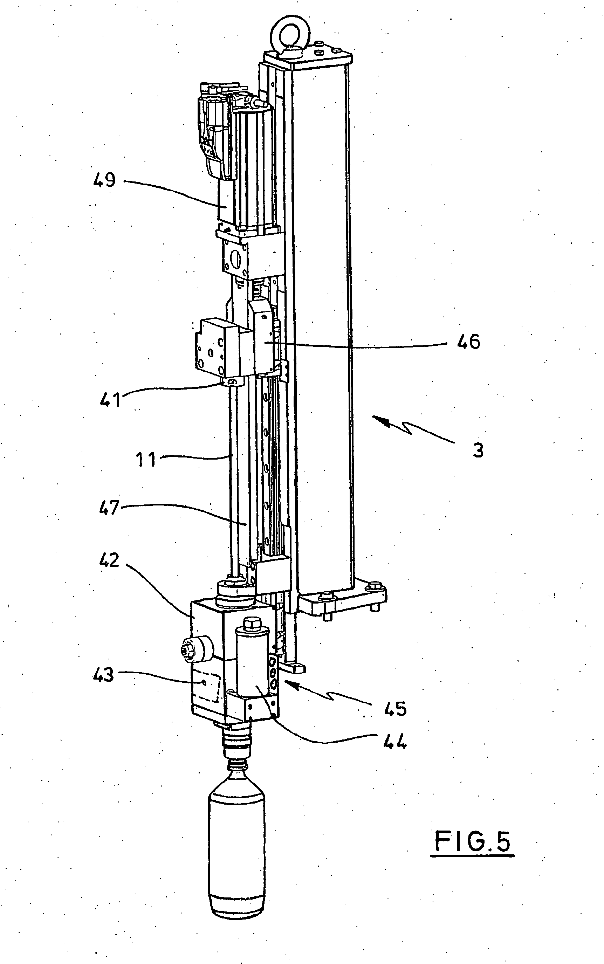

Fig. 5 zeigt eine gegenüber der Darstellung in Fig. 1 abgewandelte Darstellung der Blasstation (3) bei einer perspektivischen Blickrichtung von vorne. Insbesondere ist aus dieser Darstellung erkennbar, dass die Reckstange (11) von einem Reckstangenträger (41) gehaltert ist.

Fig. 5 zeigt ebenfalls die Anordnung eines Pneumatikblockes (46) zur Blasdruckversorgung der Blasstation (3). Der Pneumatikblock (42) ist mit Hochdruckventilen (43) ausgestattet, die über Anschlüsse (44) an eine oder mehrere Druckversorgungen angeschlossen werden können. Nach einer Blasformung der Behälter (2) wird in eine Umgebung abzuleitende Blasluft wird über den Pneumatikblock (42) zunächst einem Schalldämpfer (45) zugeführt.

Eine typische Durchführung des Blasvorganges kann am einfachsten anhand von Fig. 2 veranschaulicht werden. Nach einem Einsetzen des Vorformlings (1) in die Blasform (4) und einer Verriegelung der Blasstation (3) erfolgt zunächst ein Hineinfahren der Reckstange (11) in den Vorformling (1) bei gleichzeitiger Blasdruckunterstützung derart, dass der Vorformling (I) durch die axiale Reckung nicht auf die Reckstange (11) radial aufschrumpft.

Nach der in Fig. 2 dargestellten vollständigen Durchführung des Reckvorganges erfolgt die vollständige Expansion der Behälterblase (23) in die Endkontur des Behälters (2) und der maximale Innendruck wird so lange aufrecht erhalten, bis der Behälter (2) durch Abkühlung eine ausreichende Formstabilität erreicht hat. Nach dem Erreichen dieser Formstabilität wird die Blasdruckzufuhr abgeschaltet und die Reckstange (11) wird wieder aus der Blasform (4) und somit aus dem geblasenen Behälter (2) zurückgezogen.

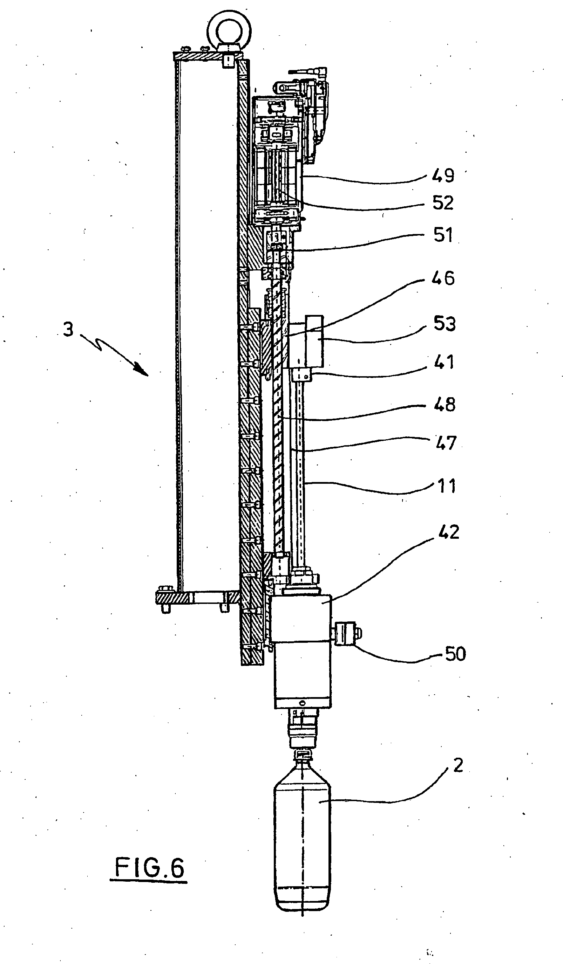

Fig. 5 veranschaulicht ebenfalls, dass der Reckstangenträger (41) mit einem Kopplungselement (46) verbunden ist, das mindestens bereichsweise hinter einer Abdeckung (47) geführt ist. Das Kopplungselement (46) ist unter Verwendung einer in Fig. 5 nicht erkennbaren Gewindestange (48) von einem Servomotor (49) positionierbar. Die Anordnung der Gewindestange (48) wird nachfolgend unter Bezugnahme auf Fig. 6 weiter erläutert.

Fig. 6 zeigt einen Längsschnitt durch die Anordnung gemäß Fig. 5. Seitlich am Pneumatikblock (42) ist eine Kurvenrolle (50) erkennbar, die zu einer mechanischen Positionierung des Pneumatikblockes (42) dient. Insbesondere wird hiermit ein Anheben bzw. Absenken des Pneumatikblockes (42) relativ zum Behälter (2) bzw. zum Vorformling (1) vorgegeben.

Das Kopplungselement (46) ist beim dargestellten Ausführungsbeispiel als eine Gewindebuchse ausgeführt, die mit einem Innengewinde in ein Außengewinde der Gewindestange (48) eingreift. Das Kopplungselement (46) erstreckt sich mit Verbindungsschenkeln bereichsweise seitlich neben der Abdeckung (47) und ist hierdurch mit dem Reckstangenträger (41) verbunden. Die Abdeckung (47) schirmt die Reckstange (11) gegenüber der Gewindestange (48) ab, so dass eine Verunreinigung der Reckstange (11) beispielsweise durch von der Gewindestange (48) ausgehende Fett- oder Ölpartikel vermieden wird. Alternativ zu der Gewindestange (48) kann auch eine Gewindespindel verwendet werden.

Die Gewindestange (48) ist über eine Kupplung (51) mit einer Motorwelle (52) des Servomotors (49) verbunden. Beim dargestellten Ausführungsbeispiel erstrecken sich die Motorwelle (52) und die Gewindestange (48) entlang einer gemeinsamen Längsachse, so dass die Gewindestange (48) als Verlängerung der Motorwelle (52) angeordnet ist. Hierdurch wird insbesondere eine getriebelose Verbindung der Motorwelle (52) mit der Gewindestange (48) unterstützt.

Außenseitig am Reckstangenträger (41) ist ein Pneumatikventil (53) angeordnet, um gegebenenfalls durch die Reckstange (11) hindurch ein gasförmiges Medium in Richtung auf den Vorformling (1) bzw. den Behälter (2) zu leiten bzw. in umgekehrter Richtung abzuführen. Es kann sich hierbei beispielsweise um Blasluft oder um Kühlluft handeln.

Die Kopplung des Servomotors (49) über die Gewindestange (48), das Kopplungselement (46) und den Reckstangenträger (41) mit der Reckstange (11) stellt ein gegenüber äußeren Belastungen starres und dennoch hoch dynamisches System bereit.

Aus einer messtechnischen Erfassung des Motorstromes des Servomotors (49) kann in einfacher Weise auf eine aktuelle Reckkraft zurückgeschfossen werden. Insbesondere ist es hierdurch möglich, nicht nur die Durchführung eines Reckvorganges in Abhängigkeit von einem vorgegebenen Positionierungsprofil, sondern von einem vorgegebenen Kraftprofil vorzunehmen. Es kann hierbei beispielsweise vorgegeben werden, entlang vorgegebener Abschnitte des Reckweges eines konstante Reckkraft oder eine vorgegeben veränderliche Reckkraft zu generieren. In Abhängigkeit von der durch die Erfassung des Motorstromes messtechnisch erfassten Reckkraft kann ebenfalls in geeigneter Weise eine Blasdruckzuführung gesteuert werden, da die konkret auftretenden Reckkräfte einen Indikator für eine optimale Blasdruckzufuhr darstellen.

Gemäß einer weiteren Ausführungsvariante ist es möglich, den Servomotor (49) bei einer von einem Innendruck des Behälters (2) unterstützten Rückführung der Reckstange (11) generatorisch zu betreiben und hierdurch eine Energierückspeisung vorzunehmen. Es kann hierdurch die elektrische Betriebsenergie für eine Mehrzahl verwendeter Servomotoren (49) vermindert werden.

Gemäß einer weiteren Ausführungsform ist daran gedacht, bei einer Anordnung der Blasstation (3) auf einem rotierenden Blasrad (25) eine zentrale Energieversorgung für die Servomotoren (49) auf dem Blasrad (25) anzuordnen. Ebenfalls kann eine für den Betrieb der Servomotoren (49) verwendete Steuereinheit auf dem Blasrad (25) positioniert werden. Gemäß einer weiterhin bevorzugten Ausführungsform ist jeder der Servomotoren (49) mit einer unmittelbar benachbart zum jeweiligen Servomotor (49) angeordneten Steuerung ausgestattet.

Eine externe Vorgabe von Steuerungswerten erfolgt unter Verwendung eines Bussystems, das die auf dem Blasrad (25) angeordnete Steuereinheit mit einer stationären Hauptsteuerung verbindet. Die auf dem Blasrad (25) angeordnete Energieversorgung für die einzelnen Servomotoren (49) kann über eine Schleifringkopplung mit einer stationär angeordneten Energiequelle verbunden werden.

Gemäß einer bevorzugten Ausführungsform wird die Gewindestange (48) mit einer gleichen Drehzahl wie die Motorwelle (52) betrieben. Grundsätzlich ist aber auch die Verwendung eines Getriebes zu Kopplung dieser beiden Bauelemente denkbar. Abweichend vom dargestellten Ausführungsbeispiel können die Motorwelle (52) und die Gewindestange (48) mit ihren jeweiligen Längsachsen auch quer oder schräg zueinander angeordnet werden, wenn über geeignete Kopplungselemente eine erforderliche kraftschlüssige Verbindung hergestellt wird.

Die bereits erwähnte Steuerung des Blasvorganges in Abhängigkeit von Zustandsdaten des Reckvorganges kann beispielsweise auch derart durchgeführt werden, dass die Zuschaltung des Vorblasdruckes und/oder des Hauptblasdruckes in Abhängigkeit von einer konkreten Positionierung der Reckstange (11) erfolgt. Hierzu ist es nicht erforderlich, die tatsächliche Position der Reckstange (11) selbst zu messen, sondern durch Auswertung von Messdaten eines Inkrementalgebers, der im Bereich des Servomotors (49) angeordnet ist, kann die aktuelle Position der Reckstange (11) ermittelt werden. Bei Erreichen einer vorgegebenen Position der Reckstange (11) wird ein zugeordnetes Blasgasventil geschaltet.

Bei den vorstehend erläuterten Ausführungsbeispielen ist jeder Blasstation (3) ein eigenes Recksystem mit Reckstange (11), Gewindestange (48) und Servomotor (49) zugeordnet. Bei einer Anordnung der mit dem Recksystem ausgestatteten Blasstationen (3) auf einem Blasrad (25) ist es insbesondere in einfacher Weise möglich, die Durchführung des Reckvorganges automatisch an unterschiedliche Produktionsraten und damit unterschiedlich Drehzahlen des Blasrades (25) anzupassen. Prozesstechnisch erweist es sich als ungünstig, bei einer Veränderung der Drehzahl des Blasrades (25) auch den Reckvorgang mit unterschiedlichen Reckgeschwindigkeiten durchzuführen, da hierdurch die Materialeigenschaften der hergestellten Behälter (2) beeinflusst würden. Es wird somit angestrebt, auch bei unterschiedlichen Drehzahlen des Blasrades (25) den Reckvorgang mit vorgegebenen Reckgeschwindigkeiten oder Reckkräften zu realisieren. Die Verwendung des Recksystems mit Servomotor (49) und Gewindestange (48) erlaubt es in einfacher Weise, über eine Maschinensteuerung eine von der Drehzahl des Blasrades (25) unabhängige Vorgabe der Reckparameter zu realisieren. Auch für vorgebbare und variierende Ausstoßleistungen der Maschine kann hierdurch eine hohe Qualität der hergestellten Behälter (2) gewährleistet werden.

Gemäß einer weiteren Ausführungsform ist daran gedacht, bei einer Ausstattung der Blasmaschine mit einer Bedieneinrichtung, beispielsweise einer Visualisierung, von einem Bediener Reckweg-Zeit-Profile, Reckkraft-Zeit-Profile, Reckkraft-Reckweg-Profile oder andere Profile für Reckparameter vorzugeben und unter Verwendung des Recksystems mit hoher Genauigkeit umzusetzen.

Hinsichtlich des Servomotors (49) ist es gemäß einem Ausführungsbeispiel möglich, einen verwendeten Regler unmittelbar in den Motor zu integrieren. Alternativ zu der erläuterten Anordnung der Gewindestange (48) als Verlängerung der Motorwelle (52) und einer ebenfalls bereits erläuterten schrägen oder rechtwinkligen Anordnung des Servomotors (49) relativ zur Gewindestange (48) unter Zwischenschaltung eines Getriebes oder anderer Kopplungselemente ist es auch möglich, zur Erreichung einer kompakten Ausführungsform den Motor seitlich neben der Gewindestange (48) anzuordnen und über ein Doppel-Winkelgetriebe oder geeignete andere Kopplungseinrichtungen die erforderliche Kopplung des Servomotors (18) mit der Gewindestange (48) zu realisieren.

Gemäß einer bevorzugten Ausführungsform ist insbesondere daran gedacht, die aus dem Kopplungselement (46) und der Gewindestange (48) ausgebildete Baugruppe entsprechend einer Kugelgewindespindel auszuführen. Das Kopplungselement (46) weist hierbei ein Innengewinde entsprechend einer Schraubenmutter auf, das in ein Außengewinde der Gewindestange (48) eingreift. Ein unmittelbarer Kontakt der Gewindegänge des Innengewindes des Kopplungselementes (46) und des Außengewindes der Gewindestange (48) miteinander kann dadurch vermieden werden, dass im Gewindebereich Kugeln ähnlich wie bei einem Kugellager angeordnet sind. Hierdurch gleiten das Innengewinde und dass Außengewinde nicht unmittelbar aufeinander und generieren hierbei Gleitreibungen, sondern es wird eine wesentlich geringere Rollreibung realisiert.

Zur Unterstützung einer kompakten und preiswerten Ausführungsform werden die Kugeln vorzugsweise im Bereich des Innengewindes des Kopplungselementes (46) angeordnet.

## Patentansprüche

1. Verfahren zur Blasformung von Behältern (2), bei dem ein Vorformling (1) aus einem thermoplastischem Material nach einer thermischen Konditionierung innerhalb einer Blasform (4) von einer Reckstange gereckt und durch Blasdruckeinwirkung in den Behälter (2) umgeformt wird, wobei eine Vorgabe der Positionierung der Reckstange (11) unter Verwendung eines elektro-mechanischen Reckstangenantriebes erfolgt, bei dem eine Drehbewegung einer Motorwelle (52) eines Servomotors (49) durch eine mechanische Kopplungseinrichtuhg in eine Hubbewegung der Reckstange (11) transformiert wird,
wobei der Servomotor (49) von einem Blasrad (25) umlaufend transportiert wird, **dadurch gekennzeichnet, dass** der Servomotor (49) mit einer auf dem Blasrad (25) angeordneten Spannungsversorgung verbunden wird, wobei der Servomotor (49) von einer in seiner unmittelbaren Umgebung angeordneten Steuerung beaufschlagt wird, nämlich von einer auf dem Blasrad angeordneten Steuereinheit, mit der der Servomotor verbunden wird, und wobei die Steuerung des Servomotors (49) von einem Bussystem mit einer externen Steuerung verbunden wird.

2. Verfahren nach Anspruch 1, **dadurch gekennzeichnet, dass** die Transformation des Drehbewegung in die Hubbewegung unter Verwendung einer Gewindestange (48) durchgeführt wird, auf der ein Kopplungselement (46) mit einem Innengewinde geführt wird.

3. Verfahren nach Anspruch 1 oder 2, **dadurch gekennzeichnet, dass** die Gewindestange (48) in Richtung einer Längsachse der Motorwelle (52) positioniert wird.

4. Verfahren nach einem der Ansprüche 1 bis 3, **dadurch gekennzeichnet, dass** unter Verwendung des Servomotors (49) und der Gewindestange (48) ein kraftgesteuertes Recken durchgeführt wird.

5. Verfahren nach einem der Ansprüche 1 bis 3, **dadurch gekennzeichnet, dass** unter Verwendung des Servomotors (49) und der Gewindestange (48) ein kraftgesteuertes Blasen durchgeführt wird.

6. Verfahren nach einem der Ansprüche 1 bis 5, **dadurch gekennzeichnet, dass** der Servomotor bei einer Rückhubbewegung der Reckstange (11) generatorisch betrieben wird.

7. Verfahren nach einem der Ansprüche 1 bis 6, **dadurch gekennzeichnet, dass** die Gewindestange (48) mit einer identischen Drehzahl wie die Motorwelle (52) betrieben wird.

8. Verfahren nach einem der Ansprüche 1 bis 7, **dadurch gekennzeichnet, dass** die Gewindestange (48) in Richtung auf die Reckstange (11) von einer Verkleidung verdeckt wird.

9. Vorrichtung zur Blasformung von Behältern (2) aus einem thermoplastischen Material, die mindestens eine mit einer Blasform (4) versehene Blasstation (3) aufweist und die mit einer Reckeinrichtung versehen ist, in deren Bereich eine Reckstange (11) zur Beaufschlagung eines in die Blasform (4) einsetzbaren Vorformlings (1) angeordnet ist und bei der die Reckstange (11) mit einer Hubsteuerung für die Durchführung einer Bewegungskoordinierung der Reckstange (11) gekoppelt ist, wobei die Reckstange (11) mit einem elektromechanischen Reckstangenantrieb verbunden ist, der einen Servomotor (49) und eine mechanische Kopplungseinrichtung zum Anschluss der Reckstange (11) an den Servomotor (49) aufweist, wobei
die Blasstation (3) gemeinsam mit dem Servomotor (49) auf einem Blasrad (25) angeordnet ist, **dadurch gekennzeichnet, dass** eine Spannungsversorgung des Servomotors (49) auf dem Blasrad (25) angeordnet ist, wobei weiterhin eine Steuerung des Servomotors (49) mit einem höchstens geringen Abstand zum Servomotor (49) angeordnet ist, nämlich als eine Steuereinheit des Servomotors (49), die auf dem Blasrad (25) angeordnet ist, und wobei schließlich die Steuerung des Servomotors (49) über ein Bussystem mit einer externen Steuerung verbunden ist.

10. Vorrichtung nach Anspruch 9, **dadurch gekennzeichnet, dass** die Kupplungseinrichtung eine Gewindestange (48) und ein mit einem Innengewinde auf der Gewindestange (48) geführtes Kopplungselement (46) umfasst.

11. Vorrichtung nach Anspruch 9 oder 10, **dadurch gekennzeichnet, dass** die Gewindestange (48) als Verlängerung einer Motorwelle (52) des Servomotors (49) angeordnet ist.

12. Vorrichtung nach einem der Ansprüche 9 bis 11, **dadurch gekennzeichnet, dass** der Servomotor (49) an eine Steuerung zur Durchführung eines kraftgesteuerten Reckens angeschlossen ist.

13. Vorrichtung nach einem der Ansprüche 9 bis 11, **dadurch gekennzeichnet, dass** der Servomotor (49) an eine Steuerung zur Durchführung eines kraftgesteuerten Blasen angeschlossen ist.

14. Vorrichtung nach einem der Ansprüche 9 bis 13, **dadurch gekennzeichnet, dass** der Servomotor (49) zur Durchführung eines zeitweisen generatorischen Betriebes ausgebildet ist.

15. Vorrichtung nach einem der Ansprüche 9 bis 14, **dadurch gekennzeichnet, dass** die Motorwelle (52) über eine Kupplung (51) starr mit der Gewindestange (48) gekoppelt ist.

16. Vorrichtung nach einem der Ansprüche 9 bis 15, **dadurch gekennzeichnet, dass** sich zwischen der Gewindestange (48) und der Reckstange (11) eine Abdeckung (47) erstreckt.

17. Vorrichtung nach einem der Ansprüche 9 bis 16, **dadurch gekennzeichnet, dass** sich die Reckstange (11) im wesentlichen parallel zur Gewindestange (48) erstreckt.

## Claims

1. A method for the blow moulding of containers (2) wherein a preform (1) made of thermoplastic material are - inside the blow mould (4) - stretched by a stretch forming bar and moulded by the action of blowing pressure to form the container (2), wherein the positioning of the stretch forming bar (11) is specified by using an electro-mechanical stretch forming bar drive in which a rotary movement of a motor shaft (52) of a servo motor (49) is transformed into a lifting movement of the stretch forming bar (11) by means of a mechanical coupling device, wherein
the servo motor (49) is transported by a blow moulding wheel (25) in a circumferential manner,
**characterised in that**
- the servo motor (49) is being connected to a voltage supply unit arranged on the blow moulding wheel (25), wherein the servo motor (49) is charged by a control that is arranged in its immediate vicinity, in particular a control unit which is arranged on the blow moulding wheel and to which the servo motor is connected, and wherein the control of the servo motor (49) is connected to an external control by means of a bus system.

2. The method according to Claim 1, **characterised in that** the transformation of the rotary movement into the lifting movement is achieved by use being made of a threaded rod (48) with a coupling element (46) having an internal thread being guided thereon.

3. The method according to Claim 1 or 2, **characterised in that** the threaded rod (48) is positioned in the direction of a longitudinal axis of the motor shaft (52).

4. The method according to any one of Claims 1 to 3, **characterised in that** stretching is achieved in a force-controlled manner by use being made of the servo motor (49) and the threaded rod (48).

5. The method according to any one of Claims 1 to 3, **characterised in that** blowing is achieved in a force-controlled manner by use being made of the servo motor (49) and the threaded rod (48).

6. The method according to any one of Claims 1 to 5, **characterised in that** the servo motor is operated by a generator during a return movement of the stretch forming bar (11).

7. The method according to any one of Claims 1 to 6, **characterised in that** the threaded rod (48) is operated at a speed that is identical with that of the motor shaft (52).

8. The method according to any one of Claims 1 to 7, **characterised in that** the threaded rod (48) is covered by a lining in the direction of the stretch forming bar (11).

9. A device for the blow moulding of containers (2) made of thermoplastic material, said device comprising at least one blowing station (3) provided with a blow mould (4) and being provided with a stretch forming device, with a stretch forming bar (11) being arranged in the vicinity of said stretch forming device to charge a preform (1) that can be inserted into the blow mould (4), and in which stretch forming device the stretch forming bar (11) is coupled to a stroke control to coordinate the movements of the stretch forming bar (11), wherein the stretch forming bar (11) is connected to an electro-mechanical stretch forming bar drive which comprises a servo motor (49) and a mechanical coupling device to connect the stretch forming bar (11) to the servo motor (49), wherein
the blowing station (3) is arranged on a blow moulding wheel (25) together with the servo motor (49), **characterised in that** a voltage supply unit of the servo motor (49) is arranged on the blow moulding wheel (25), wherein a control of the servo motor (49) is, furthermore, arranged spaced apart from the servo motor (49) by no more than a small distance, in particular as a control unit of the servo motor (49) that is arranged on the blow moulding wheel (25), and wherein, finally, the control of the servo motor (49) is connected to an external control via a bus system.

10. The device according to Claim 9, **characterised in that** the coupling device comprises a threaded rod (48) and a coupling element (46) that is guided on the threaded rod (48) with an internal thread.

11. The device according to Claim 9 or 10, **characterised in that** the threaded rod (48) is arranged as an extension of a motor shaft (52) of the servo motor (49).

12. The device according to any one of Claims 9 to 11, **characterised in that** the servo motor (49) is connected to a control to achieve force-controlled stretching.

13. The device according to any one of Claims 9 to 11, **characterised in that** the servo motor (49) is connected to a control to achieve force-controlled blowing.

14. The device according to any one of Claims 9 to 13, **characterised in that** the servo motor (49) is designed such that operation is temporarily carried out by means of a generator.

15. The device according to any one of Claims 9 to 14, **characterised in that** the motor shaft (52) is rigidly coupled to the threaded rod (48) via a coupling (51).

16. The device according to any one of Claims 9 to 15, **characterised in that** a cover (47) extends between the threaded rod (48) and the stretch forming bar (11).

17. The device according to any one of Claims 9 to 16, **characterised in that** the stretch forming bar (11), in essence, extends in parallel with the threaded rod (48).

## Revendications

1. Procédé de moulage par soufflage de récipients (2) dans le cadre duquel une préforme (1) en un matériau thermoplastique, après un conditionnement thermique, est étirée par une barre d'étirage à l'intérieur d'un moule de soufflage (4) et, sous l'action d'une pression de soufflage, transformée en un récipient (2), un positionnement défini de la barre d'étirage (11) étant obtenu par la mise en oeuvre d'un entraînement électromécanique de la barre d'étirage dans le cadre duquel un mouvement de rotation d'un arbre moteur (52) d'un servomoteur (49) est, par un dispositif d'accouplement mécanique, transformé en un mouvement de levage de la barre d'étirage (11), le servomoteur (49) étant transporté selon un mouvement de révolution par une roue de soufflage (25), **caractérisé en ce que** le servomoteur (49) est connecté à une alimentation en courant disposée sur la roue de soufflage (25), le servomoteur (49) étant assujetti à une commande disposée dans son voisinage immédiat, à savoir à une unité de commande disposée sur la roue de soufflage et connectée au servomoteur, la commande du servomoteur (49) étant elle-même connectée par un système de bus à une commande externe.

2. Procédé selon la revendication 1, **caractérisé en ce que** la transformation du mouvement de rotation en mouvement de levage est effectuée au moyen d'une tige filetée (48) sur laquelle est guidé un élément d'accouplement (46) doté d'un taraudage.

3. Procédé selon la revendication 1 ou 2, **caractérisé en ce que** la tige filetée (48) est positionnée dans le sens d'un axe longitudinal de l'arbre moteur (52).

4. Procédé selon l'une des revendications 1 à 3, **caractérisé en ce qu**'un étirage servocommandé est effectué au moyen du servomoteur (49) et de la tige filetée (48).

5. Procédé selon l'une des revendications 1 à 3, **caractérisé en ce qu**'un soufflage servocommandé est effectué au moyen du servomoteur (49) et de la tige filetée (48).

6. Procédé selon l'une des revendications 1 à 5, **caractérisé en ce que** le servomoteur fonctionne en génératrice lors d'un mouvement de retour de la barre d'étirage (11).

7. Procédé selon l'une des revendications 1 à 6, **caractérisé en ce que** la tige filetée (48) est entraînée avec une vitesse de rotation identique à celle de l'arbre moteur (52).

8. Procédé selon l'une des revendications 1 à 7, **caractérisé en ce que** la tige filetée (48) est masquée par un écran du côté de la barre d'étirage (11).

9. Dispositif de moulage par soufflage de récipients (2) en un matériau thermoplastique présentant au moins une station de soufflage (3) munie d'un moule de soufflage (4) et doté d'un dispositif d'étirage dans la zone duquel est agencée une barre d'étirage (11) qui agit sur une préforme (1) pouvant être placée dans le moule de soufflage (4), et dont la barre d'étirage (11) est couplée à une commande de levage assurant une coordination du mouvement de la barre d'étirage (11), laquelle barre d'étirage (11) est connectée à un entraînement de barre d'étirage électromécanique présentant un servomoteur (49) et un dispositif d'accouplement mécanique de la barre d'étirage (11) au servomoteur (49), la station de soufflage (3) étant agencée conjointement avec le servomoteur (49) sur une roue de soufflage (25), **caractérisé en ce qu**'une alimentation en courant du servomoteur (49) est disposée sur la roue de soufflage (25), une commande du servomoteur (49) étant placée à une distance tout au plus minime du servomoteur (49), à savoir sous forme d'unité de commande du servomoteur (49) agencée sur la roue de soufflage (25), et la commande du servomoteur (49) étant connectée par un système de bus à une commande externe.

10. Dispositif selon la revendication 9, **caractérisé en ce que** le dispositif d'accouplement comprend une tige filetée (48) et un élément d'accouplement (46) doté d'un taraudage guidé sur la tige filetée (48).

11. Dispositif selon la revendication 9 ou 10, **caractérisé en ce que** la tige filetée (48) est agencée sous forme d'une prolongation d'un arbre moteur (52) du servomoteur (49).

12. Dispositif selon l'une des revendications 9 à 11, **caractérisé en ce que** le servomoteur (49) est branché sur une commande réalisant un étirage servocommandé.

13. Dispositif selon l'une des revendications 9 à 11, **caractérisé en ce que** le servomoteur (49) est branché sur une commande réalisant un soufflage servocommandé.

14. Dispositif selon l'une des revendications 9 à 13, **caractérisé en ce que** le servomoteur (49) est conçu pour fonctionner temporairement en génératrice.

15. Dispositif selon l'une des revendications 9 à 14, **caractérisé en ce que** l'arbre moteur (52) est couplé à la tige filetée (48) par un accouplement (51) rigide.

16. Dispositif selon l'une des revendications 9 à 15, **caractérisé en ce qu**'un écran (47) s'étend entre la tige filetée (48) et la barre d'étirage (11).

17. Dispositif selon l'une des revendications 9 à 16, **caractérisé en ce que** la barre d'étirage (11) s'étend de façon essentiellement parallèle à la tige filetée (48).
